# EUROPÄISCHE PATENTANMELDUNG

(11) **EP 0 948 882 A1**
(43) Veröffentlichungstag der Anmeldung: **13.10.1999**
(21) Anmeldenummer: 99106411.4
(22) Anmeldetag: 27.03.1999
(51) Int. Cl.: A01B 59/06

(54) **Gerätekopplungs-Vorrichtung für Anbaugeräte**

(30) Priorität: 07.04.1998 US 56677
(71) Anmelder: Deere & Company, Moline, Illinois 61265-8098 (US)
(72) Erfinder: Cowley, Daniel Joseph, Waterloo, IA 50701 (US)
(74) Vertreter: Lau-Loskill, Philipp, Dipl.-Phys.

(57) **Zusammenfassung**

Es wird eine Gerätekopplungs-Vorrichtung zur Kopplung eines Anbaugerätes an ein landwirtschaftliches Fahrzeug beschrieben, welches einen Kopplungsrahmen (12), ein in seiner Länge unverstellbares Verbindungsglied (30) und wenigstens drei in ihrer Länge verstellbare Verbindungsglieder (36, 42, 48) enthält. Der Kopplungsrahmen (12) trägt mehrere Kopplungsmittel (22, 24, 26) für die Befestigung eines Anbaugerätes. Das in seiner Länge unverstellbare Verbindungsglied (30) sowie die in ihrer Länge verstellbaren Verbindungsglieder (36, 42, 48), sind jeweils mit ihrem ersten Ende gelenkig mit dem Fahrzeug und mit ihrem zweiten Ende gelenkig mit dem Kopplungsrahmen (12) verbunden.

Durch diese Lösung wird für ein Anbaugerät sowohl eine Lenkfunktion als auch die Möglichkeit einer seitlichen Verschiebung bereitgestellt.

## Beschreibung

Die Erfindung betrifft eine Gerätekopplungs-Vorrichtung zur Kopplung eines Anbaugerätes an ein landwirtschaftliches Fahrzeug.

Es sind unterschiedliche Gerätekopplungs-Vorrichtungen bekannt, durch die ein landwirtschaftliches Anbaugerät an einem landwirtschaftlichen Fahrzeug befestigbar ist. Eine derartige Gerätekopplung ist beispielsweise ein Dreipunkt-Geräteanbau, wie er durch ISO 730 oder DIN 9674 definiert ist. Übliche Dreipunkt-Geräteanbauten stellen jedoch keine Lenkfunktion für das Anbaugerät bereit. Es gibt zwar Führungsmechanismen (Acura Trak von Sunco Marketing), die für ein Anbaugerät eine Lenkfunktion bereitstellen, diese Mechanismen bieten jedoch keine Möglichkeit zum seitlichen Verschieben des Anbaugeräts. Ein aus der US-A-5,697,454 bekannter Mechanismus enthält eine Anordnung, welche um einen vertikalen Bolzen verschwenkbar ist und daher ebenfalls keine seitliche Verschiebung ermöglicht. Es gibt desweiteren Reihenführungsmechanismus, wie beispielsweise den "Navigator" der HR Manufacturing Co., die zwar ein seitliches Verschieben ermöglichen, jedoch keine Lenkfunktion des Anbaugeräts bereitstellen. Es ist daher wünschenswert, eine Gerätekopplungs-Vorrichtung bereitzustellen, die sowohl eine Lenkfunktion und ein seitliches Verschieben des Anbaugeräts ermöglicht. Insbesondere bei landwirtschaftlichen Raupenfahrzeugen wäre eine Gerätekopplung von Vorteil, durch die ein Anbaugerät sowohl lenkbar als auch seitlich verschiebbar wäre, so daß sich seitliche Kräfte, die das Anbaugerät auf das Fahrzeug überträgt, reduzieren ließen.

Die der Erfindung zugrunde liegende Aufgabe wird darin gesehen, eine gattungsgemäße Gerätekopplungs-Vorrichtung anzugeben, welche für ein Anbaugerät sowohl eine Lenkfunktion als auch die Möglichkeit einer seitlichen Verschiebung bereitstellt.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Die erfindungsgemäße Gerätekopplungs-Vorrichtung enthält einen Kopplungsrahmen, der mehrere Kopplungsmittel trägt, an die ein Anbaugerät koppelbar ist. Ein Verbindungsglied unverstellbarer Länge ist mit einem ersten Ende gelenkig mit dem Fahrzeug und mit einem zweiten Ende gelenkig mit dem Kopplungsrahmen verbunden. Vorzugsweise sind drei Verbindungsglieder variabler Länge vorgesehen, die jeweils mit einem ersten Ende gelenkig an dem Fahrzeug und mit einem zweiten Ende gelenkig an dem Kopplungsrahmen befestigt sind. Die drei Verbindungsglieder variabler Länge erstrecken sich im wesentlichen parallel zueinander und sind zueinander im Sinne einer Dreiecksanordnung beabstandet. Das Verbindungsglied unverstellbarer Länge ist in der Nähe des Zentrums dieser Dreiecksanordnung positioniert. Die Verbindungsglieder variabler Länge umfassen ein mittleres oberes Verbindungsglied, sowie ein linkes unteres und eine rechtes unteres Verbindungsglied. Die Verbindungsglieder variabler Länge enthalten vorzugsweise Hydraulikzylinder, die ausfahrbar und einfahrbar sind.

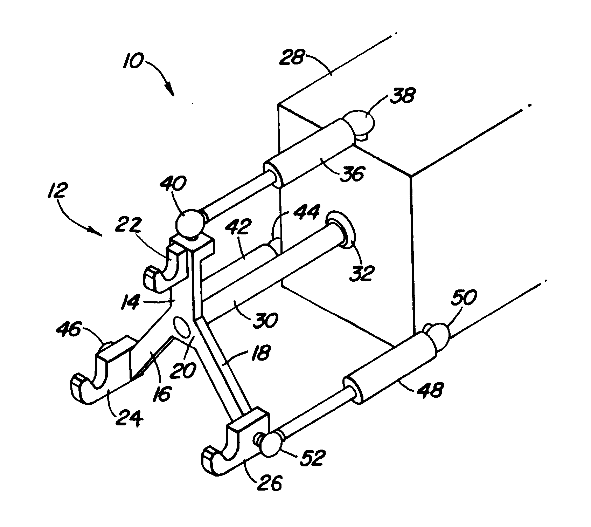

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Die einzige Figur zeigt eine Gerätekopplungs-Vorrichtung 10, welche einen Kopplungsrahmen 12 enthält. Der Kopplungsrahmen 12 weist drei Rahmenteile 14, 16, 18 auf, die in einem zentralen Knotenbereich 20 miteinander befestigt sind und sich jeweils von dem Knotenbereich 20 nach Außen erstrecken. Das äußere Ende des ersten Rahmenteils 14 trägt ein mittiges, oberes Kopplungsmittel 22. Das äußere Ende des zweiten Rahmenteils 16 trägt ein unteres, linkes Kopplungsmittel 24. Das äußere Ende des dritten Rahmenteils 16 trägt ein unteres, rechtes Kopplungsmittel 26. Bei den Kopplungsmittel 22, 24, 26 handelt es sich vorzugsweise um übliche Kopplungsmittel, wie sie Kopplungsmittel 26. Bei den Kopplungsmittel 22, 24, 26 handelt es sich vorzugsweise um übliche Kopplungsmittel, wie sie beispielsweise bei im Handel erhältlichen Dreipunkt-Geräteanbauten Verwendung finden.

Eine Basis 28 ist am hinteren Ende eines nicht näher dargestellten Fahrzeugs befestigt bzw. ist Teil des Fahrzeugrumpfes. Ein Verbindungsglied 30 unverstellbarer Länge ist mit seinem ersten Ende über ein übliches Kugelgelenk 32 gelenkig mit der Basis 28 und mit seinem zweiten Ende über ein übliches (in der Figur durch den Knotenbereich 20 in der Ansicht verdecktes) Kugelgelenk gelenkig mit dem Knotenbereich 20 verbunden. Ein erstes Verbindungsglied 36 variabler Länge ist mit seinem ersten Ende über ein Kugelgelenk 38 gelenkig mit der Basis 28 und mit seinem zweiten Ende über ein Kugelgelenk 40 gelenkig mit dem äußeren Ende des Rahmenteils 14 verbunden. Ein zweites Verbindungsglied 42 variabler Länge ist mit seinem ersten Ende über ein Kugelgelenk 44 gelenkig mit der Basis 28 und mit seinem zweiten Ende über ein Kugelgelenk 46 gelenkig mit dem äußeren Ende des Rahmenteils 16 verbunden. Ein drittes Verbindungsglied 48 variabler Länge ist mit seinem ersten Ende über ein Kugelgelenk 50 gelenkig mit der Basis 28 und mit seinem zweiten Ende über ein Kugelgelenk 52 gelenkig mit dem äußeren Ende des Rahmenteils 18 verbunden.

Bei dem dargestellten Ausführungsbeispiel haben die Verbindungsglieder im Grundzustand, in dem das Rahmenteil 14 parallel zur Stirnseite der Basis 28 ausgerichtet ist, unterschiedliche Längen, d. h. der Abstand zwischen ihren jeweiligen Gelenkpunkten ist nicht gleich lang. Das Verbindungsglied 30 unverstellbarer Länge ist im dargestellten Ausführungsbeispiel kürzer als die im Grundzustand gleichlangen Verbindungsglieder 36, 42 und 48 variabler Länge. Die Auswahl der Längen und Anlenkpunkte der Verbindungsglieder kann die Funktionsfähigkeit der Gerätekopplungs-Vorrichtung wesentlich beeinflussen.

Die variablen Verbindungsglieder 36, 42, 48 enthalten vorzugsweise Hydraulikzylinder. Durch Steuerung der Länge der Hydraulikzylinder 36, 42, 48 läßt sich der Kopplungsrahmen 12 translatorisch verschieben, ohne ihn zu verdrehen. Er läßt sich auch um eine Achse verdrehen bzw. verschwenken oder er läßt sich sowohl verschieben als auch verdrehen bzw. verschwenken. Das unverstellbare Verbindungsglied 30 dient vor allem dazu, Zug- und Druckkräfte aufzunehmen, so daß die Hydraulikzylinder 36, 42, 48 nur kleinere Kräfte aufnehmen müssen. Auch wenn die Verbindungsglieder 36, 42, 48 vorzugsweise Hydraulikzylinder enthalten, können andere in ihrer Länge verstellbare Verbindungsglieder verwendet werden. Beispielsweise kann es sich dabei um pneumatische Stellglieder, käuflich erhältliche Kugelumlaufspindel-Stellglieder, wie sie beispielsweise durch die Fa. Motion System Corporation angeboten werden (siehe Internet: www.motionsystem.com/addball.htm), oder magnetische Linearstellglieder wie sie in http://www.eleceng.leeds.ac.uk/emd/lsrd/lsrd.html beschrieben sind, handeln. Andere in ihrer Länge veränderliche Verbindungsglieder sind im Internet http://www.powertransmission.com/prod/linear.htm beschrieben.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Gerätekopplungs-Vorrichtung zur Kopplung eines Anbaugerätes an ein landwirtschaftliches Fahrzeug mit einem Kopplungsrahmen (12), der mehrere Kopplungsmittel (22, 24, 26) für die Befestigung eines Anbaugerätes trägt, mit einem in seiner Länge unverstellbaren Verbindungsglied (30), dessen erstes Ende gelenkig mit dem Fahrzeug und dessen zweites Ende gelenkig mit dem Kopplungsrahmen (12) verbunden ist, und mit wenigstens drei in ihrer Länge verstellbaren Verbindungsgliedern (36, 42, 48), deren jeweils erste Enden gelenkig mit dem Fahrzeug und deren jeweils zweite Enden gelenkig mit dem Kopplungsrahmen (12) verbunden sind.

2. Vorrichtung nach Anspruch 1, dadurch gekennzeichnet, daß die längenverstellbaren Verbindungsglieder (36, 42, 48) sich im wesentlichen parallel zueinander erstrecken und zueinander beabstandet in einer Dreickesanordnung angeordnet sind, und daß das unverstellbare Verbindungsglied (30) in der Nähe des Zentrums dieser Dreiecksanordnung positioniert ist.

3. Vorrichtung nach Anspruch 1 oder 2, dadurch gekennzeichnet, daß drei längenverstellbare Verbindungsglieder (36, 42, 48) vorgesehen sind, und zwar ein oberes Verbindungsglied (36) und ein rechtes und ein linkes unteres Verbindungsglied (42, 48).

4. Vorrichtung nach einem der Ansprüche 1 bis 3, dadurch gekennzeichnet, daß die längenverstellbaren Verbindungsglieder (36, 42, 48) jeweils wenigstens einen ein- und ausfahrbaren Hydraulikzylinder enthalten.

5. Vorrichtung nach einem der Ansprüche 1 bis 4, dadurch gekennzeichnet, daß der Kopplungsrahmen (12) einen Knotenbereich (20) und drei sich von dem Knotenbereich (20) nach Außen erstreckende Rahmenteile (14, 16, 18) aufweist.

6. Vorrichtung nach Anspruch 5, dadurch gekennzeichnet, daß jedes Rahmenteil (14, 16, 18) ein äußeres Ende aufweist, das mit einem Ende eines entsprechenden Verbindungsgliedes (36, 42, 48) variabler Länge gelenkig verbunden ist.

7. Vorrichtung nach Anspruch 5 oder 6, dadurch gekennzeichnet, daß der Bereich des äußeren Endes jedes Rahmenteils (14, 16, 18) ein Kopplungsmittel (22, 24, 26) trägt.

8. Vorrichtung nach einem der Ansprüche 1 bis 7, dadurch gekennzeichnet, daß ein zentraler Bereich (20) des Kopplungsrahmens (12) gelenkig mit dem festen Verbindungsglied (30) verbunden ist.
